# EUROPEAN PATENT APPLICATION

(11) **EP 2 634 505 A1**
(43) Date of publication of application: **04.09.2013**
(21) Application number: 11836253.2
(22) Date of filing: 25.10.2011
(51) Int. Cl.: F24J 2/14, F03G 6/00, F24J 2/48, F24J 3/06

(54) **THERMAL COLLECTOR TUBE, THERMAL COLLECTOR AND CONCENTRATED SOLAR POWER SYSTEM**

(30) Priority: 25.10.2010 JP 2010239010
(71) Applicant: Ibiden Co., Ltd., Ogaki-shi, Gifu 503-8604 (JP)
(72) Inventor: MAJIMA Kazutaka, Ibi-gun Gifu 501-0695 (JP); KATO Masataka, Ibi-gun Gifu 501-0695 (JP)
(74) Representative: HOFFMANN EITLE
(86) International application number: PCT/JP2011/074526
(87) International publication number: WO 2012/057120

(57) **Abstract**

The thermal collector tube of the invention is a thermal collector tube used in concentrated solar power generation, in which solar light is collected using reflecting mirrors, the collected light is converted into heat using a thermal collector having the thermal collector tube, and power is generated using the heat, in which the thermal collector tube has a main body portion that houses the heat medium, and a coating layer which is formed on the outer surface of the main body portion, and has a radiation rate of 0.70 to 0.98 at room temperature and a wavelength of 1 µm to 15 µm.

## Description

### Technical Field

The present invention relates to a thermal collector tube, a thermal collector, and a concentrated solar power generation system.

### Background Art

As a power generation method using the sun, concentrated solar power generation is known. In the concentrated solar power generation, generally, solar light is concentrated and converted into heat, a heat medium is heated using the heat, and a vapor turbine is driven using vapor manufactured in the above manner, thereby generating power. In the concentrated solar power generation, greenhouse effect gases are not generated during power generation so that power can be generated by storing heat even under cloudy weather conditions or at night, and therefore development thereof is underway.
As a method of the concentrated solar power generation, trough-type power generation, Fresnel-type power generation, tower-type power generation, parabola dish-type power generation and the like are known. Hereinafter, the trough-type solar power generation will be described as an example.

The trough-type solar power generation refers to a method in which solar heat is collected through horizontally long reflecting mirrors (troughs) having a cross-section formed into a substantial arc shape (for example, refer to PTL 1). In the center portions of the reflecting mirrors, thermal collector tubes, such as glass tubes, are disposed in the shaft direction of the reflecting mirrors (the direction in which recess portions between multiple reflecting mirrors are connected with each other), and a heat medium, such as oil, is present in the thermal collector tubes. The locations of the reflecting surfaces of the reflecting mirrors are adjusted so that the reflecting surfaces are disposed in a sloping manner toward the sun and collect solar light toward the thermal collector tubes so as to heat the heat medium present in the thermal collector tubes using the collected heat. In addition, the reflecting mirrors are configured so that the shafts of the reflecting mirrors can be rotated using a motor, whereby the reflecting surfaces can continuously face the sun in spite of the movement of the sun. The heated heat medium in the thermal collector tubes is supplied to the vapor turbine, and drives the vapor turbine, thereby generating power.

### Citation List

### Patent Literature

[PTL 1] Japanese Unexamined Patent Application Publication No. 2008-39367

### Summary of Invention

### Technical Problem

In order to efficiently generate power in the trough-type solar power generation, it is necessary to efficiently absorb the collected heat in the heat medium in the thermal collector tubes. However, in the trough-type solar power generation, there is a problem in that, when light collected using the reflecting mirrors passes through the thermal collector tubes, scattering or reflection occurs such that heat loss increases. Therefore, the peak temperature of the heat medium in the thermal collector tubes is approximately 400°C, and there is a demand for a feasibility of heating the heat medium to a higher temperature.

The invention has been made in consideration of the above circumstance, and an object of the invention is to provide a thermal collector tube, a thermal collector, and a concentrated solar power generation system, in which a heat medium housed in the thermal collector tubes can be heated to a higher temperature by increasing thermal efficiency.

### Solution to Problem

The present inventors carried out a variety of studies regarding trough-type solar power generation having a high thermal efficiency, and paid attention to a fact that a factor that deteriorates the thermal efficiency is the reflection of solar light occurring on the outside surfaces of thermal collector tubes or scattering of solar light caused by the thermal collector tubes. In addition, the inventors found that it is possible to efficiently obtain a necessary amount of heat for power generation by significantly reducing reflection on the outside surfaces of the thermal collector tubes that house a heat medium or scattering caused by the thermal collector tubes, absorbing solar heat in the thermal collector tubes, and efficiently transferring heat from the thermal collector tubes that have absorbed the heat to the heat medium, and reached the invention.

That is, according to a first aspect, there is provided a thermal collector tube used in concentrated solar power generation, in which solar light is collected using reflecting mirrors, the collected light is converted into heat using a thermal collector having the thermal collector tube, and power is generated using the heat, in which the thermal collector tube has a main body portion that houses the heat medium, and a coating layer which is formed on the outside surface of the main body portion, and has a radiation rate of 0.70 to 0.98 at room temperature and a wavelength of 1 µm to 15 µm.

Since the thermal collector tube has the coating layer which is formed on the outside surface of the main body portion, and has a radiation rate of 0.70 to 0.98 at room temperature (25°C) and a wavelength of 1 µm to 15 µm, it is possible to significantly reduce reflection or scattering of solar light, efficiently absorb solar light, and convert solar light into heat. In addition, it is also possible to reduce radiation of the heat of the collected solar light by covering the outside surface of the main body portion with the coating layer. Furthermore, it is possible to efficiently transfer heat of the main body portion which has been heated so as to have a sufficiently increased temperature to the heat medium, and, compared to a thermal collector tube of the related art, in which the heat medium is directly heated using collected solar light, the heat medium can be heated so as to have an increased temperature more efficiently. Meanwhile, in the invention, room temperature refers to 25°C.

In the thermal collector tube according to a second aspect, the coating layer is preferably made of an infrared black body coating composition including an infrared radiator mainly including an oxide of a transition element (hereinafter also referred to as a crystalline inorganic material) and an inorganic compound having a softening temperature of 400°C to 1000°C (hereinafter also referred to as an amorphous inorganic material). The coating layer having the above composition is excellent in terms of adhesion with the main body portion, and is not easily detached even when the main body portion is into a high temperature state.

In the thermal collector tube according to a third aspect, a thickness of the coating layer is preferably 0.2 µm to 50 µm. When the coating layer has the above thickness, it is possible to relatively easily form the coating layer having a uniform thickness by coating a coating fluid (coating material) on the outside surface of the main body portion.

In the thermal collector tube according to a fourth aspect, the coating layer is preferably formed on the entire outside surface of the main body portion. When the thermal collector tube has the above composition, it is possible to increase heat transfer efficiency, and to more reliably reduce the radiation of heat.

In the thermal collector tube according to a fifth aspect, the oxide of a transition element is preferably at least one selected from manganese dioxide, manganese oxide, iron oxide, cobalt oxide, copper oxide and chromium oxide, and the inorganic compound is preferably a high expansion glass with a low melting point made of at least one selected from aluminosilicate glass, potassium lead glass, soda lead glass, soda zinc glass, soda barium glass, barium glass, boron glass, strontium glass, high lead glass and potassium soda lead glass. When the coating layer has the above composition, it is possible to produce the thermal collector tube having the coating layer which is black and is excellent in terms of adhesion with the main body portion.

In the thermal collector tube according to a sixth aspect, a thermal conductivity of the coating layer is preferably 0.1 W/mK to 2.8 W/mK.

In the thermal collector tube according to a seventh aspect, a difference in a coefficient of thermal expansion between the coating layer and the main body portion of the thermal collector tube is preferably 1 × 10⁻⁵/°C or less.

In the thermal collector tube according to an eighth aspect, the main body portion of the thermal collector tube is preferably a glass tube.

According to a ninth aspect, there is provided a thermal collector used in concentrated solar power generation, in which solar light is collected using reflecting mirrors, the collected solar light is converted into heat using the thermal collector having the thermal collector tube, and power is generated using the heat, including
the thermal collector tube and a heat medium housed in the thermal collector tube, in which the thermal collector tube is any of the above thermal collector tubes of the invention.
Since the thermal collector tube according to the invention is used in the thermal collector according to the invention, it is possible to increase the heat transfer efficiency, whereby heat is efficiently transferred to the heat medium housed in the thermal collector tube so that the heat medium can be heated to a desired temperature faster and reliably.

According to a tenth aspect, there is provided a concentrated solar power generation system, in which solar light is collected using reflecting mirrors, the collected light is converted into heat using a thermal collector having a thermal collector tube, water vapor is generated using the heat, and a vapor turbine is driven using the water vapor, thereby generating power, in which the thermal collector is the above thermal collector of the invention.
Since the thermal collector according to the invention is used in the concentrated solar power generation system according to the invention, it is possible to more efficiently absorb solar light and store heat in the thermal collector, and power generation efficiency is improved.

### Brief Description of Drawings

Fig. 1 is a perspective view illustrating the configuration of a thermal collector tube according to a first embodiment of the invention.
Fig. 2 is an explanatory view schematically illustrating a concentrated solar power generation system according to a third aspect of the invention.
Fig. 3A is a perspective view explaining a thermal collector that configures the concentrated solar power generation system illustrated in Fig. 2, and Fig. 3B is a cross-sectional view of the thermal collector illustrated in Fig. 3A cut along the line A-A.

### Description of Embodiments

### (First embodiment)

Hereinafter, a first embodiment, which is an embodiment of the invention, will be described with reference to the accompanying drawings.

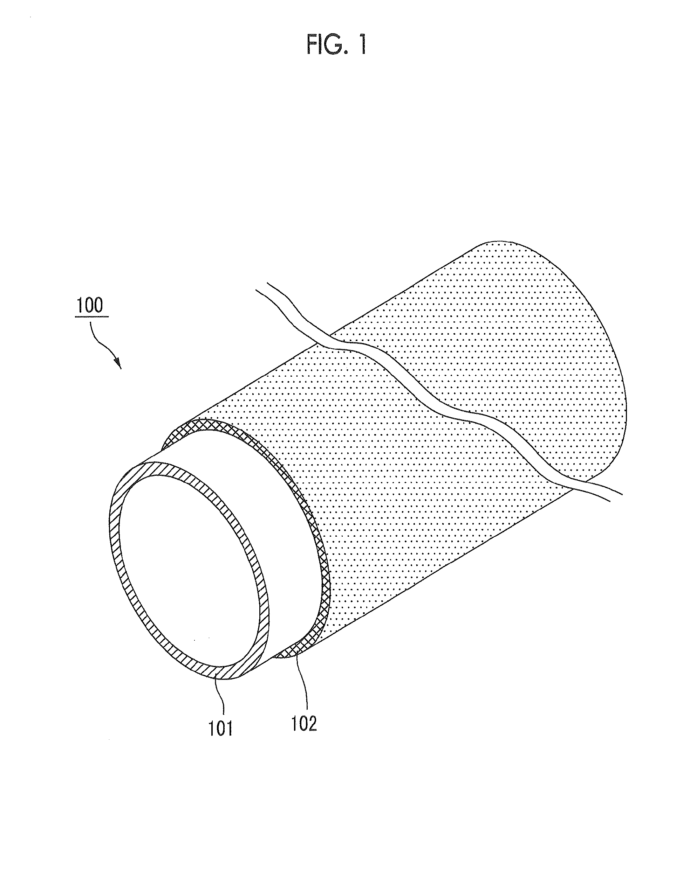

Fig. 1 is a perspective view illustrating the configuration of a thermal collector tube according to the first embodiment of the invention.
As illustrated in Fig. 1, the thermal collector tube 100 according to the present embodiment has a main body portion 101 and a coating layer 102 formed on the outside surface of the main body portion.
In Fig. 1, the locations of the main body portion 101 and the coating layer 102 are deviated in order to explain the structure of the thermal collector tube 100 in an easily understandable manner; however, strictly, the coating layer 102 is formed on the entire outside surface of the main body portion 101.

The main body portion 101 has a horizontally long shape, and is configured so as to be capable of housing a heat medium therein. Specifically, the main body portion is a tube having a round tube shape, an oval tube shape or the like.
The material of the main body portion 101 is glass, such as silica glass.
The size of the main body portion 101 is not particularly limited, and a desired shape, size and the like can be appropriately selected depending on use. As an example, the main body portion is a glass tube having a diameter (outer diameter) of 1 cm to 90 cm. When the diameter (outer diameter) is less than 1 cm, the volume is not large enough to house the heat medium, and, when the diameter of the glass tube exceeds 90 cm, it is difficult for the temperature of the glass tube to become uniform, and the glass tube becomes liable to be broken due to the non-uniform temperature of the glass tube at respective portions.

The coating layer 102 is formed on the entire outside surface of the main body portion 101. The outside surface of the main body portion 101 refers to a portion to which the reflected light of solar light is radiated.

The radiation rate of the coating layer 102 at room temperature (25°C) and a wavelength of 1 µm to 15 µm is preferably 0.70 to 0.98, and more preferably 0.92 to 0.98.
The region of a wavelength of 1 µm to 15 µm is a so-called near infrared region and far infrared region, in which large heat is liable to be generated. When the radiation rate is less than 0.70, it is not possible to obtain a sufficient heat transfer efficiency, and, when the radiation rate exceeds 0.98, it is difficult to manufacture the coating layer. Therefore, when the radiation rate is 0.70 to 0.98, it is possible to increase the efficiency of transferring heat from the coating layer 102 to the inside of the main body portion 101 using reflected light.
The radiation rate may be measured by measuring the rate of the outside surface of the coating layer 102, or by separately adjusting a measurement specimen, and measuring the rate. As the method for measuring the radiation rate, it is possible to use a measurement in which the known spectrophotometry is used.

Meanwhile, the radiation rate of a glass tube, in which the coating layer 102 is not formed, at room temperature (25°C) and a wavelength of 1 µm to 15 µm is 0.56.
In addition, according to the Stefan-Boltzmann law, the radiation heat transfer velocity per unit area from an object is proportional to the product of the fourth power of the temperature of the object and the radiation rate of the object. Therefore, it is possible to consider that the heat transfer velocity (thermal conductivity) increases as the radiation rate increases.
The thermal conductivity of the coating layer 102 according to the embodiment at room temperature (25°C) is preferably 0.1 W/mK to 2.8 W/mK, more preferably 1.2 W/mK to 2.8 W/mK, and still more preferably 1.2 W/mK to 2.0 W/mK.

Since the color of the coating layer 102 is black, it is possible to efficiently absorb solar light by reducing the reflected light of solar light.

Examples of the black coating layer 102 include a layer made of an infrared black body coating composition including an infrared radiator mainly including an oxide of a transition element (crystalline inorganic material) and an inorganic compound having a softening temperature of 400°C to 1000°C (amorphous inorganic material).
The oxide of a transition element is, for example, at least one selected from manganese dioxide, manganese oxide, iron oxide, cobalt oxide, copper oxide and chromium oxide, and, among the above, manganese dioxide is particularly desirable. The oxide may be used solely or in combination of two or more kinds. Since the above oxide of a transition metal has a high radiation rate in the infrared range, it is possible to form the coating layer 102 having a high radiation rate.

The inorganic compound having a softening temperature of 400°C to 1000°C is preferably a high expansion glass with a low melting point, and, specifically, is preferably at least one selected from aluminosilicate glass, potassium lead glass, soda lead glass, soda zinc glass, soda barium glass, barium glass, boron glass, strontium glass, high lead glass and potassium soda lead glass.
When fused, coated on the outside surface of the main body portion 101, and subjected to a heating and firing treatment, since the high expansion glass with a low melting point has favorable affinity (adhesion) to the main body portion 101, it is possible to easily and firmly form the coating layer 102 on the outside surface of the main body portion 101.
If the softening temperature of the inorganic compound is less than 400°C, when the temperature of the main body portion 101 of the thermal collector tube 100 increases after the coating layer 102 is formed, the coating layer 102 becomes easy to flow so as to become liable to be detached and dropped. On the other hand, when the softening temperature of the inorganic compound exceeds 1000°C, it becomes difficult to fuse the material of the coating layer 102 and coat the material on the outside surface of the main body portion 101.

Meanwhile, among materials that configure the coating layer 102, in a case in which an infrared radiator mainly including an oxide of a transition metal, the radiation rate of which at room temperature (25°C) and a wavelength of 1 µm to 15 µm is 0.75 to 0.98, and an inorganic compound having a softening temperature of 400°C to 1000°C, the radiation rate of which at room temperature (25°C) and a wavelength of 1 µm to 15 µm is 0.65 to 0.96, are used to form the coating layer 102, it is possible to set the radiation rate of the coating layer 102 in a range of 0.70 to 0.98.

In addition, among the materials that configure the coating layer 102, since the coefficient of thermal expansion of the infrared radiator mainly including an oxide of a transition metal is as low as 8 × 10⁻⁶/°C to 9 × 10⁻⁶/°C, and the coefficient of thermal expansion of the inorganic compound having a softening temperature of 400°C to 1000°C is as high as 8 × 10⁻⁶/°C to 25 × 10⁻⁶/°C, it is possible to control the coefficient of thermal expansion of the coating layer 102 by adjusting the blending ratio of the infrared radiator and the inorganic compound. Since the coefficient of thermal expansion of the main body portion 101 made of glass is, for example, 5 × 10⁻⁷/°C, it is possible to make the coefficients of thermal expansion of the coating layer 102 and the main body portion 101 made of glass approximate by adjusting the blending ratio of the crystalline inorganic material and the amorphous inorganic material, and it is possible to improve the adhesion force of both.
The desirable coefficient of thermal expansion of the coating layer 102 varies depending on the combination with the metal material that configures the main body portion 101, but the difference in the coefficient of thermal expansion between the coating layer 102 and the main body portion 101 of the thermal collector tube 100 is preferably 1 × 10⁻⁵/°C or less.

The blending fraction of the crystalline inorganic material in the coating layer 102 can be determined in consideration of the relationship with the control of the coefficient of thermal expansion as described above, but the desirably lower limit is 10 weight%, the more desirably lower limit is 30 weight%, the desirably upper limit is 90 weight%, and the more desirable upper limit is 70 weight%. This is because, when the blending fraction of the crystalline inorganic material is less than 10 weight%, it is not possible to sufficiently increase the radiation rate, and the heat radiating property at a high temperature degrades, and, when the blending fraction of the crystalline inorganic material exceeds 90 weight%, the adhesion with the main body portion 101 of the thermal collector tube 100 decreases.

The thermal conductivity of the coating layer 102 at room temperature (25°C) is preferably 0.1 W/mK to 2.8 W/mK. The thermal conductivity can be measured using a known measurement method, such as a hot-wire method, a hot-wire method or a laser flash method. However, when the thermal conductivity is measured in a state in which the coating layer 102 is formed in the main body portion 101 of the thermal collector tube 100, substantially, the thermal conductivity of the entire thermal collector tube 100 including the main body portion is measured, and it is not possible to measure the thermal conductivity of the coating layer 102 alone, and therefore it is necessary to separately prepare a measurement specimen.
When the thermal conductivity of the coating layer 102 at room temperature (25°C) is less than 0.1 W/mK, the thermal conductivity of the coating layer 102 is too low such that it is not possible to favorably transfer heat to the heat medium. On the other hand, when the thermal conductivity of the coating layer 102 at room temperature (25°C) exceeds 2.8 W/mK, it becomes difficult to form the coating layer 102.

Specifically, the crystalline inorganic material and the amorphous inorganic material are crushed, mixed at predetermined proportions, then, heated to a temperature that is the melting point of the amorphous inorganic material or more, kneaded in a state in which the amorphous inorganic material is melted, cooled and solidified, thereby manufacturing a solid substance.
This solid substance is processed into a shape suitable for the respective measurement methods, whereby it is possible to measure the thermal conductivity using a known measurement method.

In a case in which an oxide of a transition metal, as the crystalline inorganic material having a thermal conductivity at room temperature (25°C) of 0.5 W/mK to 2.8 W/mK, and a high expansion glass with a low melting point, as the amorphous inorganic material having a thermal conductivity at room temperature (25°C) of 0.1 W/mK to 1.2 W/mK, are used to prepare the coating layer 102, it is possible to set the thermal conductivity of the coating layer 102 at room temperature (25°C) to be 0.1 W/mK to 2.8 W/mK.

In the thermal collector tube of the invention, when the thermal conductivity of the coating layer 102 at room temperature (25°C) is 0.1 W/mK to 2.8 W/mK, it is possible to increase the velocity at which heat is transferred to the heat medium through the main body portion 101 from the coating layer 102. With the above composition of the coating material, it is difficult to produce the coating layer 102 having a conductivity of less than 0.1 W/mK.

The thickness of the coating layer 102 is not particularly limited, but is preferably 0.2 µm to 50 µm, and more preferably 0.2 µm to 1.5 µm. When the thickness of the coating layer 102 is less than 0.2 µm, there is a tendency for the effect of preventing the reflection of solar light on the outside surface of the thermal collector tube 100 to degrade, and, when the thickness of the coating layer 102 exceeds 50 µm, it becomes difficult to form the coating layer 102 having a uniform thickness. In addition, when the thickness of the coating layer 102 is thick, the manufacturing costs increase, and therefore the thickness is preferably thin.

Hereinafter, the method for manufacturing the thermal collector tube of the embodiment will be described.
First, a coating fluid (coating material) for forming the coating layer 102 is prepared.
The coating fluid is prepared through the wet mixing of the crystalline inorganic material and the amorphous inorganic material. Specifically, the powder of the crystalline inorganic material and the powder of the amorphous inorganic material are prepared so as to have predetermined particle sizes, shapes and the like respectively, the respective powders are dry-mixed at a predetermined blending ratio so as to prepare a powder mixture, furthermore, water is added, and the components are wet-mixed using a ball mill, thereby preparing a slurry. The blending ratio between the powder mixture and water is not particularly limited, but is desirably 100 parts by weight of water with respect to 100 parts by weight of the powder mixture. This is because the slurry needs to have an appropriate viscosity in order for coating on the main body portion 101. In addition, an organic solvent may be used as necessary.

Subsequently, the adjusted coating fluid is coated on the entire outside surface of the main body portion 101. The method for coating the coating fluid on the main body portion 101 is not particularly limited as long as the coating layer 102 having a uniform film thickness can be obtained, and examples thereof include methods, such as spray coating, curtain coating, dipping, transcription and brush coating.

Next, the coated coating fluid is dried and fired so as to form the coating layer having a thickness of 0.2 µm to 50 µm. The firing temperature is set to a temperature at which the adhesion between the coating layer 102 and the main body portion 101 increases. Thereby, the thermal collector tube 100 according to the embodiment is obtained.

Hereinafter, the actions and effects of the thermal collector tube of the embodiment will be listed.
(1) In the thermal collector tube of the embodiment, since the coating layer having a radiation rate of 0.70 to 0.98 at room temperature (25°C) and a wavelength of 1 µm to 15 µm is formed on the outside surface, it is possible to efficiently transfer heat obtained from the reflected light of solar light to the inside of the thermal collector tube. Therefore, when the thermal collector tube is used in a thermal collector used for concentrated solar power generation, the thermal collector tube can more efficiently heat the heat medium housed in the thermal collector tube.

(2) In the thermal collector tube of the embodiment, since the coating layer is black, the thermal collector tube can further absorb the reflected light of solar light, and thus further increase the heat transfer efficiency of the solar light.

(3) In the thermal collector tube of the embodiment, since the coating layer is made of an infrared black body coating composition including the infrared radiator mainly including an oxide of a transition element and an inorganic compound having a softening temperature of 400°C to 1000°C, the thermal collector has the coating layer which is excellent in terms of adhesion with the main body portion of the thermal collector tube, and is not easily detached from the main body portion of the thermal collector tube even when the thermal collector tube is into a high temperature state.

(4) In the thermal collector tube of the embodiment, since the thickness of the coating layer is 0.2 µm to 50 µm, it is possible to uniformly coat the coating fluid (coating material) on the outside surface of the main body portion, and to produce the thermal collector tube in which the coating layer having a desired thickness is formed.

(5) In the thermal collector tube of the embodiment, since the coating layer is formed on the entire outside surface of the thermal collector tube, it is possible to further increase the heat transfer efficiency, and to suppress the radiation of heat.

(6) In the thermal collector tube of the embodiment, since the oxide of a transition element that forms the coating layer is at least one selected from manganese dioxide, iron oxide, cobalt oxide, copper oxide and chromium oxide, and the inorganic compound is a high expansion glass with a low melting point, which is made of at least one selected from aluminosilicate glass, potassium lead glass, soda lead glass, soda zinc glass, soda barium glass, barium glass, high lead glass and potassium soda lead glass, the thermal collector tube has a coating layer which is excellent in terms of adhesion with the main body portion.

Hereinafter, examples, in which the first embodiment of the invention is disclosed more specifically, will be described, but the invention is not limited to the examples.

### (Example 1)

A glass tube made of silica glass was used as the main body portion 101. The glass tube was obtained by cutting a cylinder having a thickness of 2 mm and a diameter of 100 mm into a length of 100 mm.

### (Formation of the coating layer)

Next, MnO₂ powder (65 wt%) as the crystalline inorganic material, CuO powder (5 wt%) and BaO-SiO₂ glass powder (30 wt%) as the amorphous inorganic material were dry-mixed so as to prepare a powder mixture, 100 parts by weight of water was added to 100 parts by weight of the powder mixture, and the components were wet-mixed using a ball mill, thereby preparing a slurry (coating material).

A coating process, in which this slurry was coated toward the outer surface of the glass tube through spray coating was carried out.
After that, the glass tube having the coated layer formed through spray coating was dried at 100°C for two hours, and a firing process, in which the glass tube was heated and fired at 700°C in the air for one hour, was carried out, thereby forming the coating layer 102, whereby the thermal collector tube 100 was manufactured.
For the formed coating layer 102, the radiation rate at room temperature (25°C) and a wavelength of 1 µm to 15 µm was measured using a spectrophotometer (measurement apparatus: System 200-type manufactured by Perkin Elmer Inc.). In addition, the thickness of the formed coating layer 102 was measured. The thickness of the coating layer 102 was performed by cutting the glass tube and observing the cross-sectional surface using a scanning electron microscope (SEM).
The results of the radiation rate and the thickness of the obtained coating layer 102 are described in Table 1.

Meanwhile, when preparing the slurry, the crystalline inorganic material and the amorphous inorganic material, which had the above compositions, were crushed, mixed, then, heated to a temperature that was the melting point of the amorphous inorganic material or more, kneaded in a state in which the amorphous inorganic material was melted, cooled, and solidified, thereby manufacturing a solid substance. Then, the thermal conductivity λ was measured using a quick thermal conductivity meter (QTM-500 manufactured by Kyoto Electronics Mfg. Co., Ltd.). In addition, the coefficient of thermal expansion α was measured using a thermo mechanical analysis (TMA) apparatus (TMA8310 manufactured by Rigaku Corporation) in a range of room temperature (25°C) to 100°C. The results of the thermal conductivity λ and coefficient of thermal expansion α of the obtained slurry are described in Table 1.

### (Evaluation of temperature increase time)

The thermal collector tube 100 was heated from a distance of 50 mm from the surface of a sample using four spot photographing lamps RPS-500WB (100 V, 150 W) manufactured by Panasonic Corporation, and the temperature increase time from room temperature (25°C) to 100°C was measured. The measurement results of the temperature increase times were described in Table 1.

### (Evaluation of the adhesion of the coating layer 102)

A test in which 10 cycles of a process, in which the thermal collector tube 100 was heated up to 800°C using an electric furnace, and cooled to room temperature (25°C) through natural cooling as a single cycle, were repeated was carried out, and whether the coating layer 102 was detached from the main body portion 101 after the repetition test was visually observed. The evaluation results of the adhesion of the coating layer 102 (presence of detachment) were described in Table 1.

### (Examples 2 to 7)

Regarding the material of the coating layer 102, the proportion of the amorphous inorganic material and the type of the crystalline material were set as described in Table 1 respectively. That is, MnO₂ and Fe₃O₄ were adjusted to 30 wt% in Example 2, MnO₂ and CuO were set to 70 wt% in Example 3, MnO₂ and Fe₃O₄ were set to 10 wt% in Example 4, mullite was set to 30 wt% in Example 5, MnO₂ and CuO were set to 90 wt% in Example 6, and Al₂O₃ was set to 30 wt% in Example 7. Thermal collector tubes 100 were manufactured in the same manner as in Example 1 using the above materials.
Here, the proportion of the crystalline material was the proportion obtained by subtracting the proportion of the amorphous inorganic material, which is described in Table 1, from 100%, and, in a case in which the crystalline material is made up of two materials, the composition was set to MnO₂:CuO = 65 wt%:5wt%, MnO₂:Fe₃O₄ = 65 wt%:5wt%. Meanwhile, as the amorphous inorganic material, the same material as in Example 1 was used.
In the respective examples, the thermal conductivity λ, coefficient of thermal expansion α, radiation rate and thickness of the coating layers 102 were measured in the same manner as in Example 1. The results are described in Table 1.
In addition, in the respective examples, the coating process was carried out so as to obtain the thicknesses of the coating layers described in Table 1 by changing the conditions of the spray coating of the slurry.

In the respective examples, the temperature increase times were measured, and the adhesion of the coating layers 102 (presence of detachment) was evaluated in the same manner as in Example 1.
The compositions of the main body portions 101 and the coating layers 102 are described in Table 1. In addition, the evaluation results are also described in Table 1.

### (Comparative example 1)

A glass tube was manufactured in the same manner as in Example 1 except that the coating layer was not formed in the glass tube.
The temperature increase time was measured in the same manner as in Example 1.
The evaluation results are described in Table 1.

**[Table 1]**

| | Main body portion | Coating layer | | | | | | Temperature increase time (seconds) | Presence of detachment |
|---|---|---|---|---|---|---|---|---|---|
| | | Radiation rate | Proportion of amorphous inorganic material (wt%) | Type of crystalline material | Thermal conductivity λ (W/mK) | Coefficient of thermal expansion α (×10-6/°C) | Thickness (µm) | (room temperature →100°C) | |
| Example 1 | Glass | 0.96 | 30 | MnO₂, CuO | 1.2 | 8.3 | 1.5 | 162 | No |
| Example 2 | Glass | 0.94 | 30 | MnO₂, Fe₃O₄ | 1.3 | 7.8 | 0.5 | 155 | No |
| Example 3 | Glass | 0.96 | 70 | MnO₂, CuO | 1.2 | 9.5 | 1.5 | 172 | No |
| Example 4 | Glass | 0.98 | 10 | MnO₂, Fe₃O₄ | 1.3 | 7.5 | 1.2 | 177 | No |
| Example 5 | Glass | 0.94 | 30 | Mullite | 1.2 | 6.3 | 1.5 | 183 | Yes |
| Example 6 | Glass | 0.92 | 90 | MnO₂, CuO | 1.2 | 10.1 | 0.2 | 188 | Yes |
| Example 7 | Glass | 0.96 | 30 | Al₂O₃ | 2.8 | 8.5 | 1.2 | 205 | No |
| Comparative example 1 | Glass | 0.56 | - | - | - | - | - | 250 | - |

As is evident from Table 1, it is found that the temperature increase time of the thermal collector tubes manufactured in Examples 1 to 7 from room temperature (25°C) to 100°C were 155 seconds to 205 seconds, which are shorter than the temperature increase time of 250 seconds in Comparative example 1. Therefore, the temperature increase times are short in Examples 1 to 7, and it is possible to make the heat medium reach a desired temperature within a short period of time. This is considered to be because the thermal collector tubes of Examples 1 to 7 have a favorable heat absorbing property due to the coating layer. In addition, since the radiation rate in Examples 1 to 7 are 0.92 to 0.98, which are higher than 0.56 in Comparative example 1, it is considered that, in a case in which the thermal collector tubes of Examples 1 to 7 are used as a thermal collector for solar power generation, heat is radiated from the coating layer 102, and can be efficiently transferred to the heat medium housed in the main body portion 101.
In Comparative example 1, the temperature increase time is as long as 250 seconds, and it takes a long times for the heat medium to reach a desired temperature. In addition, since the radiation rate is as low as 0.56, and the temperature of the metal tube has already reached a high temperature, it is considered that, in a case in which the thermal collector tube is used as a thermal collector for solar power generation, the thermal conduction property deteriorates, and it is not possible to efficiently transfer heat to the heat medium housed in the metal tube.

### (Second embodiment)

Hereinafter, a second embodiment, which is an embodiment of the invention, will be described. In the present embodiment, the thermal collector tube according to the first embodiment of the invention, in which the main body portion of the thermal collector tube 100 is configured of a metal, will be described. Meanwhile, since the second embodiment is the same as the first embodiment of the invention except for the configuration of the main body portion, herein, the main body portion will be mainly described.

In the embodiment, as the metal that configures the main body portion 101 of the thermal collector tube 100, a metal, such as steel, iron or copper, a nickel-based alloy, such as inconel, hasterlloy or invar, an alloy, such as stainless steel, or the like can be used. Since the metal material has a high thermal conductivity, in a case in which the metal is used as the main body portion of the thermal collector tube, it is possible to increase the heat transfer velocity to the housed heat medium, and it is possible to shorten the temperature increase time for the heat medium to reach a predetermined temperature.

In addition, since the metal material has high thermal resistance, the metal material can be preferably used in a temperature range of 500°C to 1000°C. Considering the use in concentrated solar power generation, it is not possible to say that a temperature of less than 500°C is sufficiently high when absorbing solar light, and, when the temperature exceeds 1000°C, there occurs a problem with the durability of the metal material.
In addition, when the metal material is used in the main body portion 101 of the thermal collector tube 100, it is possible to produce the thermal collector tube 100 of the invention, which is excellent in terms of thermal impact resistance, workability, mechanical characteristics and the like at a relatively low cost.

Meanwhile, the thickness of the thermal collector tube is preferably 0.2 mm to 10 mm, and more preferably 0.4 mm to 4 mm.
When the thickness of the thermal collector tube 100 is less than 0.2 mm, the strength is not strong enough for use as a thermal collector tube for concentrated solar power generation, and, when the thickness of the thermal collector tube 100 exceeds 10 mm, since the thermal capacity of the metal material becomes excessively large, the time for increasing the temperature of the housed heat medium extends.

Since the coating layer formed on the outside surface of the thermal collector tube 100 is made of an infrared black body coating composition including an infrared radiator mainly including an oxide of a transition element and an inorganic compound having a softening temperature of 400°C to 1000°C, the thermal collector tube has the coating layer which is excellent in terms of adhesion with the main body portion 101 of the thermal collector tube 100, and is not easily detached from the main body portion 101 even when the thermal collector tube is into a high temperature state. If the softening temperature of the inorganic compound is less than 400°C, when the temperature of the main body portion 101 of the thermal collector tube 100 increases after the coating layer 102 is formed, the coating layer 102 becomes easy to flow so as to be liable to be detached and dropped. On the other hand, when the softening temperature of the inorganic compound exceeds 1000°C, it becomes difficult to fuse and coat the coating on the outside surface.

Meanwhile, among the materials that configure the coating layer 102, since the coefficient of thermal expansion of the infrared radiator mainly including an oxide of a transition metal is as low as 8 × 10⁻⁶/°C to 9 × 10⁻⁶/°C, and the coefficient of thermal expansion of the inorganic compound having a softening temperature of 400°C to 1000°C is as high as 8 × 10⁻⁶/°C to 25 × 10⁻⁶/°C, it is possible to control the coefficient of thermal expansion of the coating layer 102 by adjusting the blending ratio of the infrared radiator and the inorganic compound. Since the coefficient of thermal expansion of the main body portion 101 made of a metal, for example, stainless steel is 1 × 10⁻⁵/°C to 18 × 10⁻⁶/°C, it is possible to make the coefficients of thermal expansion of the coating layer 102 and the main body portion 101 made of the metal material approximate by adjusting the blending ratio of the crystalline inorganic material and the amorphous inorganic material, and it is possible to improve the adhesion force of the coating layer 102 and the main body portion 101.
The desirable coefficient of thermal expansion of the coating layer varies depending on the combination with the metal material that configures the main body portion 101, but the difference in the coefficient of thermal expansion between the coating layer 102 and the thermal collector tube 100 (the metal material of the main body portion 101) is preferably 1 × 10⁻⁵/°C or less.

In the embodiment, before forming the coating layer 102 on the outside surface of the main body portion 101 of the thermal collector tube 100 made of a metal material, it is desirable to carry out a surface treatment on the main body portion 101 of the thermal collector tube 100. The surface treatment on the main body portion of the thermal collector tube 100 is a process of removing impurities on the main body portion. The method of the surface treatment is not particularly limited, and it is possible to use an ordinary cleansing method. Examples thereof include a method in which ultrasonic cleansing is carried out in an alcohol solvent, a cleansing method in which an acid is used, and the like.

In addition, after the coating layer 102 is formed on the outside surface of the main body portion 101 of the thermal collector tube 100, it is preferable to fire the main body portion 101 so as to fix the coating layer 102 to the main body portion 101.

Hereinafter, the actions and effects of the thermal collector tube of the second embodiment will be listed.
The embodiment does not only exhibit the actions and effects of (1) to (6) of the first embodiment of the invention, but also exhibits the following effect.

(7) In the thermal collector tube of the embodiment, since the main body portion is formed of a metal, a thermal collector tube having a high strength can be obtained.

Hereinafter, examples, in which the second embodiment of the invention is disclosed more specifically, will be described, but the invention is not limited to the examples.

### (Examples 8 to 15)

Thermal collector tubes 100 were manufactured in the same manner as in Examples 1 to 7 using the main body portion 101 formed of a metal material. In addition, a variety of properties of the coating layer 102 were measured in the same manner as in Example 1 except for the above. Furthermore, the temperature increase times were measured and the adhesion of the coating layers 102 (presence of detachment) was evaluated in the same manner as in Example 1 respectively.
The compositions of the main body portions 101 and the coating layers 102 are described in Table 2. In addition, the evaluation results are described in Table 2.

Meanwhile, the main body portion 101 was SUS430 which had a thermal conductivity (λ) of 25 W/mK at room temperature (25°C) and a coefficient of thermal expansion (α), which was measured in a range of room temperature (25°C) to 100°C, of 10.4 × 10⁻⁶/°C, and a cylinder having a thickness of 2 mm and a diameter of 100 mm cut into a length of 100 mm was used.
In addition, the main body portion 101 was ultrasonic-cleansed in an alcohol solvent, and then subjected to a sand blast treatment, thereby carrying out a surface treatment process in which the outside surface was cleansed and coarsened.
The sand blast treatment was carried out for 10 minutes using #600 SiC abrasive grains. Here, RzJIS of the outside surface of the main body portion was measured after the surface treatment process, and was 1.5 µm.

### (Comparative example 2)

A coating layer was not formed on the main body portion 101 formed using the same metal material as in Example 8. The temperature increase time was measured in the same manner as in Example 1 using a thermal collector tube made up of the main body portion 101 alone.
The composition and evaluation results of the main body portion 101 are described in Table 2.

**[Table 2]**

| | Main body portion | Coating layer | | | | | | Temperature increase time (seconds) | Presence of detachment |
|---|---|---|---|---|---|---|---|---|---|
| | | Radiation rate | Proportion of amorphous inorganic material (wt%) | Type of crystalline material | Thermal conductivity λ (W/mK) | Coefficient of thermal expansion α (×10-6/°C) | Thickness (µm) | (room temperature →100°C) | |
| Example 8 | SUS430 | 0.96 | 30 | MnO₂, CuO | 1.2 | 8.3 | 1.5 | 162 | No |
| Example 9 | SUS430 | 0.94 | 30 | MnO₂, Fe₃O₄ | 1.3 | 7.8 | 0.5 | 155 | No |
| Example 10 | SUS304 | 0.96 | 70 | MnO₂, CuO | 1.2 | 9.5 | 1.5 | 172 | No |
| Example 11 | SUS430 | 0.98 | 10 | MnO₂, Fe₃O₄ | 1.3 | 7.5 | 1.2 | 177 | No |
| Example 12 | SUS430 | 0.96 | 30 | MnO₂, CuO | 1.2 | 8.3 | 1.5 | 158 | No |
| Example 13 | SUS304 | 0.94 | 30 | Mullite | 1.2 | 6.3 | 1.5 | 183 | Yes |
| Example 14 | SUS304 | 0.92 | 90 | MnO₂, CuO | 1.2 | 10.1 | 0.2 | 188 | Yes |
| Example 15 | SUS430 | 0.96 | 30 | Al₂O₃ | 2.8 | 8.5 | 1.2 | 205 | No |
| Comparative example 2 | SUS430 | 0.30 | - | - | - | - | - | 250 | - |

As is evident from Table 2, it is found that the temperature increase time of the thermal collector tubes manufactured in Examples 8 to 15 were 155 seconds to 205 seconds, which are shorter than the temperature increase time of 250 seconds in Comparative example 2. This is considered to be because the thermal collector tubes of Examples 8 to 15 have a favorable heat absorbing property due to the coating layer. In addition, since the radiation rate in Examples 8 to 15 are 0.92 to 0.98, which are higher than 0.30 in Comparative example 2, it is considered that, in a case in which the thermal collector tubes of Examples 8 to 15 are used as a thermal collector for solar power generation, heat is radiated from the coating layer 102, and can be efficiently transferred to the heat medium housed in the main body portion 101.
In Comparative example 2, the temperature increase time is as long as 250 seconds, and it takes a long times for the heat medium to reach a desired temperature. In addition, since the radiation rate is as low as 0.30, and the temperature of the metal tube has already reached a high temperature, it is considered that, in a case in which the thermal collector tube is used as a thermal collector for solar power generation, the thermal conduction property deteriorates, and it is not possible to efficiently transfer heat to the heat medium housed in the metal tube.

### (Third embodiment)

Hereinafter, a third embodiment, which is an embodiment of the concentrated solar power generation system of the invention, will be described.
In the concentrated solar power generation system according to the present embodiment, the thermal collector tube according to the first embodiment of the invention is used as the thermal collector. In addition, a trough-type solar power generation system will be described as an example of the concentrated solar power generation system.

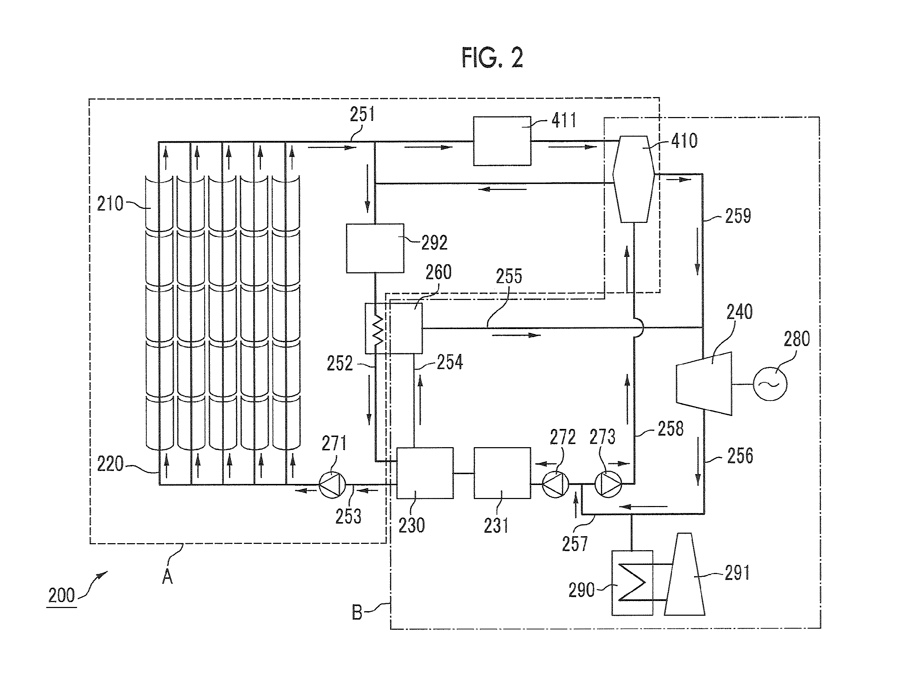

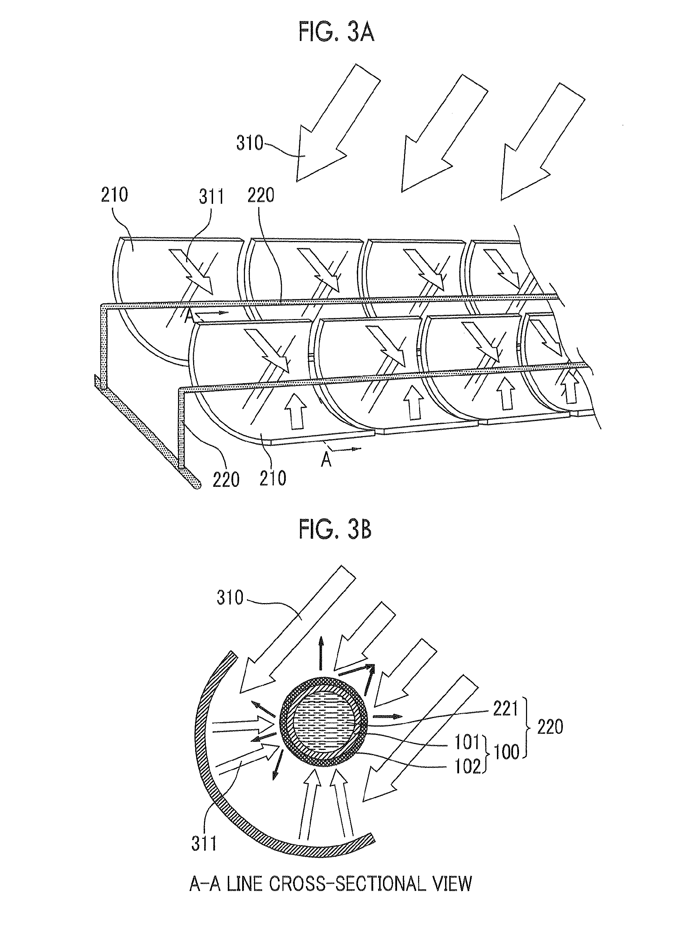

Fig. 2 is an explanatory view schematically illustrating the concentrated solar power generation system according to the third embodiment of the invention. Fig. 3A is a perspective view explaining a thermal collector that configures the concentrated solar power generation system illustrated in Fig. 2, and Fig. 3B is a cross-sectional view of the thermal collector illustrated in Fig. 3A cut along the line A-A.

A concentrated solar power generation system 200 illustrated in Fig. 2 is configured so that solar heat is collected in a thermal collector 220 through multiple reflecting mirrors 210, and water vapor is generated in a water vapor generating device 230 using the heat, thereby driving a vapor turbine 240 so as to generate power.
The concentrated solar power generation system according to the embodiment is largely divided into two regions of a heat medium circulation region A, in which a heat medium is circulated, and a water vapor circulation region B for circulating water vapor.

First, the heat medium circulation region A will be described.
The multiple reflecting mirrors 210 and the thermal collector 220 are provided in the heat medium circulation region A.
As illustrated in Figs. 3A and 3B, the reflecting mirror 210 has a horizontally long shape having a cross-section formed into a substantially arc shape, and multiple reflecting mirrors are disposed in the vertical direction (longitudinal direction) and in the horizontal direction. The reflecting mirrors 210 disposed in the longitudinal direction are coupled using a common shaft (not shown), and are adjusted so that reflected light 311 of solar light 310 hits the center portion of a reflecting surface, that is, the thermal collector 220 disposed on the focal line. In addition, the reflecting mirrors are configured so that, as the sun moves along the horizon, the shaft is rotated using a tracking motor (not shown) so that the reflecting mirrors follow the orbit of the sun.

The thermal collector 220 houses a heat medium 221 in the thermal collector tube 100 according to the first embodiment of the invention as illustrated in Fig 3B. The heat medium 221 is a heat conducting oil (oil) that absorbs heat of the solar light 310.

As illustrated in Fig. 2, the solar light 310 is collected using the multiple reflecting mirrors 210, when the heat of the solar light collected in the thermal collector 220 is stored, the heated heat medium 221 supplies heat to a reheating device 292 and a superheater 260 through a pipe 251, and is, furthermore, supplied to the water vapor generating device 230.
In the water vapor generating device 230, water vapor is generated due to the heat supplied from the heat medium 221, and an operation in the water vapor circulation region B described below is carried out.
Since the heat medium 221 that has passed through the water vapor generating device 230 has already been into a state of a low temperature, the heat medium is again supplied to the thermal collector 220 using a circulation pump 271 provided in a pipe 253, and the above treatment is repeated. As such, the heat medium 221 is circulated between the heat collector 220 and the water vapor generating device 230.

Meanwhile, the reheating device 292 is for controlling the temperature change of the heat medium 221 during the day.
The reheating device 292 has a heat storing device (not shown), and the heat supplied from the heat medium 221 as described above is stored in the heat storing device. The stored heat is used for, for example, heating of the heat medium 221, the temperature of which has decreased after the sunset. As such, when the heat medium 221 is supplied to the thermal collector 220 in a state in which the heat medium is heated to a certain extent using the reheating device 292, it is possible to rapidly start the operation in the heat medium circulation region A after the sunrise.

Next, the water vapor circulation region B will be described.
As described above, when heat is supplied to the water vapor generating device 230 using the heated heat medium 221, water that has exchanged heat with the heat medium 221 turns into water vapor. The water vapor is in a saturation state, and is supplied to the superheater 260 through a pipe 254. The water vapor in a saturation state is further heated in the superheater 260 so as to turn into superheated water vapor having a higher temperature. The superheated water vapor is supplied to the vapor turbine 240 through a pipe 255 so as to drive the vapor turbine 240. Thereby, a power generator 280 is activated so as to generate power.

The water vapor that has passed through the vapor turbine 240 is led to a cooling tower 291 having a condenser 290 through a pipe 256, condensed, and then supplied to a preheating device 231 and the water vapor generating device 230 using a circulation pump 272 through a pipe 257. In addition, as necessary, some water is supplied to an auxiliary boiler 410 through a pipe 258 using a circulation pump 273, heated, and then supplied to the vapor turbine 240 through a pipe 259.

The auxiliary boiler 410 is connected to a pipe 251 in the heat medium circulation region A through a heat storing device 411. Some of the heat medium 221, which has been warmed using solar light, is supplied to the heat storing device 411 from the pipe 251, and excess heat is stored in the heat storing device 411. The heat medium 221 that has supplied heat to the heat storing device 411, again, returns to the heat medium circulation region A, and the same operation as above repeats.
After the sunset, on rainy or cloudy days, and the like, water vapor is not supplied from the heat medium circulation region A, and therefore, when the above state is formed, the heat stored in the heat storing device 411 is supplied to the auxiliary boiler 410, and water vapor is supplied to the vapor turbine 240 through the pipe 259.
Meanwhile, the concentrated solar power generation system, in which the thermal collector tube of the first embodiment of the invention is used, has been described, but the same effects can be obtained even when the thermal collector tube of the second embodiment of the invention is used.

Hereinafter, the actions and effects of the concentrated solar power generation system according to the third embodiment of the invention will be listed. (1) In the concentrated solar power generation system of the embodiment, since the thermal collector tube according to the first embodiment of the invention is used as the thermal collector, it is possible to efficiently convert the radiated solar light into heat, and to efficiently generate power.

(2) In the trough-type solar power generation of the related art, the heat medium is heated to approximately 400°C; however, in the concentrated solar power generation system of the embodiment, since the thermal collector 220, in which the thermal collector tube of the first embodiment of the invention is used, is used, it becomes possible to heat the heat medium 221 to approximately 500°C.

(3) In the concentrated solar power generation system of the embodiment, since the auxiliary boiler connected to the thermal collector is provided, power generation at night becomes possible.

(4) In the concentrated solar power generation system of the embodiment, since the auxiliary boiler can also generate water vapor using a fuel, such as natural gas, it is possible to generate power even on cloudy days and the like, and to stably supply electric power.

(Other embodiments)

In the first and second embodiments of the invention, the coating layer 102 is formed on the entire outside surface of the main body portion 101, but the coating layer 102 may be formed on at least some of the outside surface of the main body portion 101 to which reflected light is radiated.

The main body portion 101 may have a multilayer structure. A vacuum dual tube-type main body portion can be an example. The vacuum dual tube-type main body portion has a dual structure, in which an inner tube housing the heat medium is inserted into an outer tube disposed on the outside, and a vacuum state is held between the outer tube and the inner tube. When the vacuum dual tube-type main body portion is used, the radiation of heat stored in the heat medium can be suppressed.

In addition, the concentrated solar power generation system illustrated in Fig. 2 is an example of the concentrated solar power generation system according to the third embodiment of the invention, and the members and the like that configure the power generation system are not limited to the members and the like illustrated in Fig. 2, and can be appropriately set as necessary. For example, in the concentrated solar power generation system illustrated in Fig. 2, multiple reheating devices, multiple superheaters, multiple heat storing devices and the like may be provided. In addition, the auxiliary boiler 410 is not essential, and it is also possible to appropriately change the number, disposition locations and the like of the circulation pumps 271, 272 and 273.
In addition, in the third embodiment of the invention, an example, in which the auxiliary boiler having the heat storing device is provided in the water vapor circulation region B, has been described, but the concentrated solar power generation system may have a configuration in which the heat storing device and the auxiliary boiler are separately provided. The heat storing material in the heat storing device is not particularly limited, and, for example, sand, a fused salt, or the like can be used.

In addition, in the third embodiment of the invention, the trough-type concentrated solar power generation system has been described, but the thermal collector tubes according to the first and second embodiments of the invention can be applied to other concentrated solar power generation systems. Examples of the other concentrated solar power generation systems, to which the thermal collector tubes can be applied, include Fresnel-type, tower-type, parabola dish-type concentrated solar power generation systems and a power generation system called an integrated solar combined cycle system (ISCCS), in which the trough-type concentrated solar power generation system and thermal power generation are combined. That is, the thermal collector tube can be applied to different types of the concentrated solar power generation system as long as reflecting mirrors and thermal collectors are used in the concentrated solar power generation system.

In the third embodiment of the invention, an example, in which oil is used as the heat medium, has been described; however, as the heat medium, not only oil but also water, an organic solvent having a low viscosity, water vapor, air, argon or the like can be applied.

### Reference Signs List

- 100: THERMAL COLLECTOR TUBE
- 101: MAIN BODY PORTION
- 102: COATING LAYER
- 200: CONCENTRATED SOLAR POWER GENERATION SYSTEM
- 210: REFLECTING MIRROR
- 220: THERMAL COLLECTOR
- 221: HEAT MEDIUM
- 230: WATER VAPOR GENERATING DEVICE
- 231: PREHEATING DEVICE
- 240: VAPOR TURBINE
- 251, 252, 253, 254, 255, 256, 257, 258, 259: PIPE
- 260: SUPERHEATER
- 271, 272, 273: CIRCULATION PUMP
- 280: POWER GENERATOR
- 290: CONDENSOR
- 291: COOLING TOWER
- 292: REHEATING DEVICE
- 310: SOLAR LIGHT
- 311: REFLECTED LIGHT
- 410: AUXILIARY BOILER
- A: HEAT MEDIUM CIRCULATION REGION
- B: WATER VAPOR CIRCULATION REGION

## Claims

1. A thermal collector tube used in concentrated solar power generation, in which solar light is collected using reflecting mirrors, the collected solar light is converted into heat using a thermal collector having the thermal collector tube, and power is generated using the heat,
wherein the thermal collector tube has a main body portion that houses the heat medium, and a coating layer which is formed on the outside surface of the main body portion, and has a radiation rate of 0.70 to 0.98 at room temperature and a wavelength of 1 µm to 15 µm.

2. The thermal collector tube according to Claim 1, wherein the coating layer is made of an infrared black body coating composition including an infrared radiator mainly including an oxide of a transition element and an inorganic compound having a softening temperature of 400°C to 1000°C.

3. The thermal collector tube according to Claim 1 or 2,
wherein a thickness of the coating layer is 0.2 µm to 50 µm.

4. The thermal collector tube according to any one of Claims 1 to 3,
wherein the coating layer is formed on the entire outside surface of the main body portion.

5. The thermal collector tube according to any one of Claims 2 to 4,
wherein the oxide of a transition element is at least one selected from manganese dioxide, manganese oxide, iron oxide, cobalt oxide, copper oxide and chromium oxide, and
the inorganic compound is a high expansion glass with a low melting point made of at least one selected from aluminosilicate glass, potassium lead glass, soda lead glass, soda zinc glass, soda barium glass, barium glass, boron glass, strontium glass, high lead glass and potassium soda lead glass.

6. The thermal collector tube according to any one of Claims 1 to 5,
wherein a thermal conductivity of the coating layer is 0.1 W/mK to 2.8 W/mK.

7. The thermal collector tube according to any one of Claims 1 to 6,
wherein a difference in a coefficient of thermal expansion between the coating layer and the main body portion of the thermal collector tube is 1×10⁻⁵/°C or less.

8. The thermal collector tube according to any one of Claims 1 to 7,
wherein the main body portion of the thermal collector tube is a glass tube.

9. A thermal collector used in concentrated solar power generation, in which solar light is collected using reflecting mirrors, the collected light is converted into heat using the thermal collector having a thermal collector tube, and power is generated using the heat, comprising:
the thermal collector tube; and
a heat medium housed in the thermal collector tube,
wherein the thermal collector tube is the thermal collector tube according to any one of Claims 1 to 8.

10. A concentrated solar power generation system, in which solar light is collected using reflecting mirrors, the collected light is converted into heat using a thermal collector having a thermal collector tube, water vapor is generated using the heat, and a vapor turbine is driven using the water vapor, thereby generating power, wherein the thermal collector is the above thermal collect or according to Claim 9.
